# FASCICULE DE BREVET EUROPEEN

(11) **EP 2 092 717 B1**
(45) Date de publication et mention de la délivrance du brevet: **24.07.2013**
(21) Numéro de dépôt: 07858738.3
(22) Date de dépôt: 26.11.2007
(51) Int. Cl.: H04L 29/06

(54) **PASSERELLE RESIDENTIELLE ET PROCEDE DE CONFIGURATION D'UNE TELLE PASSERELLE**
RESIDENTES GATEWAY UND VERFAHREN ZUM KONFIGURIEREN EINES DERARTIGEN GATEWAYS
RESIDENT GATEWAY AND METHOD FOR CONFIGURING SUCH GATEWAY

(30) Priorité: 12.12.2006 FR 0655444
(43) Date de publication de la demande: 26.08.2009
(73) Titulaire: FRANCE TELECOM, 75015 Paris (FR)
(72) Inventeur: HÉMON, Philippe, 22730 Tregastel (FR); LE BER, Erwan, 22300 Lannion (FR)
(86) Numéro de dépôt international: PCT/FR2007/052400
(87) Numéro de publication internationale: WO 2008/071891

(56) Documents cités:
- US-A1- 2004 010 327
- US-B1- 7 046 659

## Description

### Arrière-plan de l'invention

L'invention se situe dans le domaine des télécommunications et, plus précisément, dans celui des passerelles résidentielles.

De façon connue, de telles passerelles offrent à une pluralité de terminaux domestiques la possibilité de communiquer avec des terminaux distants, via le réseau Internet auquel est connectée cette passerelle, en utilisant un protocole de voix sur IP (Internet Protocol) connu sous l'acronyme VoIP (Voice Over IP).

Il est de plus en plus fréquent que les utilisateurs souscrivent à une offre de voix sur IP multi-ligne, notamment lorsqu'une pluralité de terminaux sont utilisés dans le foyer.

Se pose alors le problème de la complexité de configuration des terminaux VoIP connectés à la passerelle domestique.

En effet, dans l'état actuel de la technique, l'opérateur doit fournir autant de fichiers de configuration qu'il existe de terminaux VoIP dans le réseau. Cette solution manque de souplesse puisque, si l'utilisateur souhaite ajouter un nouveau terminal ou modifier le numéro de téléphone affecté à un terminal, dans le cas d'une souscription à une offre multi-ligne, il doit en avertir l'opérateur pour que ce dernier fournisse un nouveau fichier de configuration pour le terminal en question.

En outre, la configuration d'un terminal par l'utilisateur est fastidieuse du fait du manque de convivialité de l'interface (clavier alphanumérique du téléphone) et de la complexité des paramètres à saisir (login, password,...).

La passerelle résidentielle INVENTEL (marque déposée), dénommée Inventel DECT Cordless VoIP Gateway DV5213/DV7213, telle que présentée par exemple dans un communiqué de presse du 10 mars 2005 (CeBIT, 10-16 mars 2005, Hanovre - Hall 15, Pavillon français, stand D13), fonctionnant en VoIP adresse ce problème de configuration.

Elle permet au client de souscrire à une offre VoIP multi-ligne selon laquelle le client dispose d'une pluralité de terminaux et de numéros de téléphone.

Mais, dans cette solution, les terminaux domestiques ne sont pas des terminaux conformes au protocole SIP (Session Initiation Protocol), normalisé et standardisé par l'Internet Engineering Task Force (IETF) dans le document RFC3161, ce protocole SIP étant, de façon connue, le standard ouvert de VoIP interopérable le plus répandu.

En effet, la passerelle INVENTEL ne gère que des terminaux conformes au protocole DECT (Digital Enhanced Cordless Telephone), de sorte que la terminaison SIP se fait dans la passerelle.

En conséquence, dans le cas de la technologie DECT, le problème technique de la multiplicité des fichiers de configuration dans le cadre d'une offre multi-ligne ne se pose pas.

### Objet et résumé de l'invention

L'invention concerne un procédé de configuration d'une passerelle résidentielle apte à communiquer à au moins un terminal domestique selon le protocole SIP, ce procédé comportant :
- une première phase d'enregistrement par ladite passerelle d'au moins un compte de voix sur IP auprès d'une plateforme de service SIP ;
- une deuxième phase d'enregistrement, dans un fichier dit « fichier d'enregistrement » stocké dans la passerelle, d'un identifiant logique du terminal avec une adresse de ce terminal ; et
- une phase d'association, dans un fichier dit « fichier d'association » stocké dans la passerelle du compte de voix sur IP avec l'identifiant logique du terminal.

Corrélativement, l'invention concerne une passerelle résidentielle apte à communiquer à au moins un terminal domestique selon le protocole SIP, cette passerelle comportant :
- des premiers moyens pour enregistrer au moins un compte de voix sur IP auprès d'une plateforme de service SIP ;
- des deuxièmes moyens d'enregistrement, dans un fichier dit « fichier d'enregistrement », d'un identifiant logique du terminal avec une adresse de ce terminal ; et
- des moyens d'association, dans un fichier dit « fichier d'association », dudit compte de voix sur IP avec l'identifiant logique du terminal.

La présente invention permet donc de résoudre le problème de la complexité de configuration d'une pluralité de terminaux conformes au protocole SIP, en intégrant, dans la passerelle résidentielle selon l'invention, des moyens pour masquer la complexité du réseau domestique pour l'opérateur ou le fournisseur de service.

L'invention présente un intérêt tout particulier dans le cadre d'une offre VoIP multi-ligne dans laquelle l'utilisateur dispose d'une pluralité de terminaux et de numéros de téléphone.

Cette invention diffère notamment de la solution INVENTEL présentée ci-dessus en ce que les terminaux sont des terminaux "intelligents" dotés de moyens de mise en oeuvre du protocole SIP, par opposition aux terminaux DECT qui ne peuvent gérer que de la téléphonie.

Dans un mode particulier de réalisation de l'invention, la première phase d'enregistrement comporte :
- une étape de téléchargement d'un fichier dit « fichier de configuration », ce fichier comportant des données permettant d'enregistrer le compte de voix sur IP auprès de la plateforme de service ; et ;
- une étape d'envoi d'une requête d'enregistrement comportant les données à la plateforme de service.

En pratique, cette phase d'enregistrement peut être effectuée lors de l'achat de la passerelle. La passerelle télécharge le fichier de configuration VoIP préparé par l'opérateur et enregistre automatiquement le ou les comptes provisionnés auprès de la plateforme de service SIP.

Dans un mode particulier de réalisation de l'invention, chacun de ces comptes comporte notamment un numéro de téléphone associé avec un couple login/password spécifique pour ce numéro.

Dans un mode particulier de réalisation de l'invention, la deuxième phase d'enregistrement comporte :
- une étape de réception d'une requête DHCP (Dynamic Host Configuration Protocol) en provenance du terminal ;
- une étape d'obtention de l'adresse IP du terminal et d'envoi de cette adresse au terminal en réponse à la requête ;
- une étape de réception d'une requête d'enregistrement comportant au moins l'identifiant logique et l'adresse ; et
- une étape d'enregistrement de l'identifiant logique et de l'adresse dans le fichier d'enregistrement.

Pour la mise en oeuvre de ce mode particulier de réalisation de l'invention, il est nécessaire que la passerelle domestique comporte un serveur DHCP.

Si ce n'est pas le cas, le client doit connaître l'adresse IP de son terminal et la configurer dans son terminal, en plus de l'identifiant logique de ce terminal.

En pratique, l'identifiant logique du terminal peut être un nom du terminal, associé à une pièce de la maison ("cuisine", "salon"), à un utilisateur ("Elodie"), ou à un groupe d'utilisateurs ("parents").

A l'issue de cette deuxième phase d'enregistrement, le terminal SIP est enregistré dans la passerelle résidentielle.

Mais il n'a toujours pas le droit de passer ou de recevoir un appel VoIP, du fait que ce terminal n'est pas associé avec un compte de voix sur IP, ce qui va être fait au cours de la phase d'association de l'invention.

Dans un mode particulier de réalisation de l'invention, cette phase d'association comporte :
- une étape d'envoi, sur réception d'une requête, d'un formulaire comportant un élément distinctif de chacun des comptes de voix sur IP et un champ permettant d'associer au moins un identifiant logique de terminal à chacun de ces éléments ; et
- une étape de réception du formulaire complété et d'enregistrement, dans le fichier d'association, des identifiants logiques de terminaux en association avec les comptes de voix sur IP, conformément au contenu du formulaire.

Une telle phase d'association peut ainsi se faire de façon simple et conviviale pour l'utilisateur, par exemple en accédant à un site web hébergé par la passerelle résidentielle.

Cette phase d'association a lieu uniquement lors du premier rattachement du terminal auprès de la passerelle.

Préférentiellement, l'élément distinctif d'un compte est le numéro de téléphone associé à ce compte.

Conformément à l'invention, un même terminal peut être associé à un ou plusieurs numéros de téléphone, plusieurs terminaux pouvant être associés au même numéro de téléphone.

Dans un mode particulier de réalisation, les différentes étapes du procédé de configuration sont déterminées par des instructions de programmes d'ordinateurs.

En conséquence, l'invention vise aussi un programme d'ordinateur sur un support d'informations, ce programme étant susceptible d'être mis en oeuvre dans une passerelle résidentielle ou plus généralement dans un ordinateur, ce programme comportant des instructions adaptées à la mise en oeuvre des étapes d'un procédé de configuration tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, dans son environnement, une passerelle conforme à l'invention dans un mode particulier de réalisation de l'invention ;
- la figure 2 représente des fichiers utilisés dans la passerelle de la figure 1 ; et
- la figure 3 représente, sous forme d'organigramme, les principales étapes d'un procédé de configuration conforme à l'invention dans un mode particulier de réalisation.

### Description détaillée d'un mode de réalisation

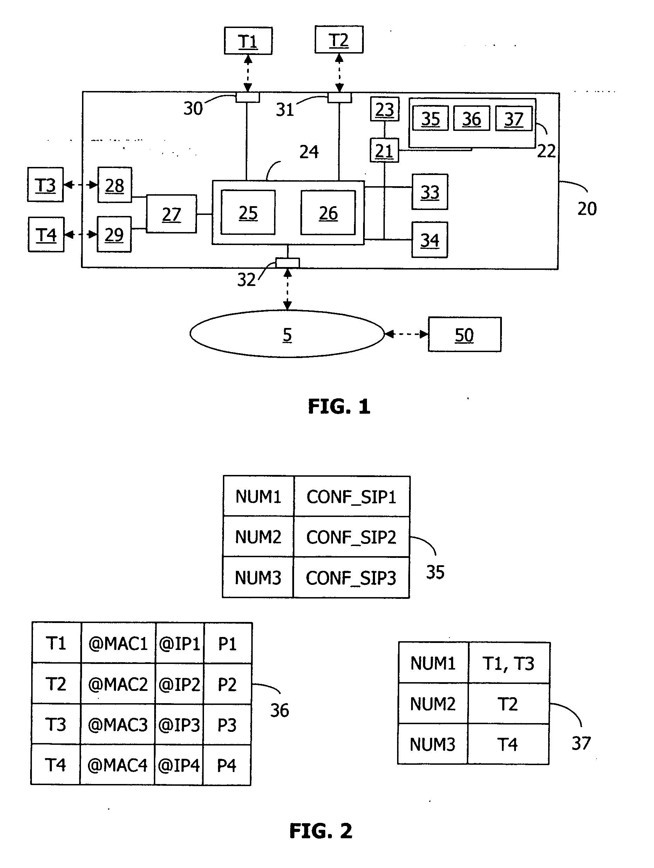

La **figure 1** représente une passerelle résidentielle 20 conforme à l'invention. Dans le mode de réalisation décrit ici, cette passerelle résidentielle 20 a l'architecture d'un ordinateur conventionnel. Elle comporte notamment un processeur 21, une mémoire vive de type RAM 22 et une mémoire morte de type ROM 23.

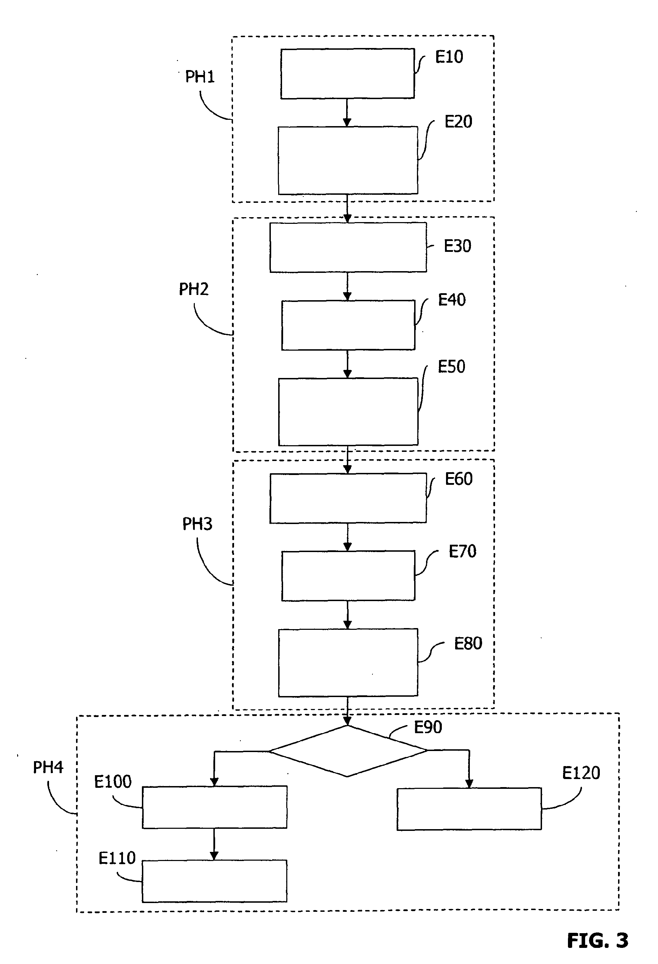

La mémoire morte 23 mémorise un programme d'ordinateur comprenant des instructions pour l'exécution des étapes du procédé de configuration selon l'invention qui sera décrit ultérieurement en référence à la figure 3.

La passerelle 20 selon l'invention décrite ici comporte un module SIP 24, ce module 24 comportant principalement :
- un module SIP Registrar 25 ; et
- un proxy SIP 26.

Dans l'exemple décrit ici, on considère que la passerelle résidentielle 20 est connectée à quatre terminaux T1, T2, T3 et T4.

Le terminal T1 est relié, via une interface Ethernet RJ 45, référencée 30, directement au module SIP 24.

Le terminal T2 est un terminal sans fil relié au module SIP 24 par une interface WiFi référencée 31.

Dans l'exemple de réalisation décrit ici, la passerelle résidentielle 20 comporte également une entité SIP UA (User Agent) référencée 27 permettant d'interfacer la passerelle résidentielle 20 avec le terminal T3 via un port USB 28 et le terminal DECT T4 via un port FXS (Foreign exchange Subscriber).

Conformément à l'invention, chaque terminal est configuré avec le strict minimum d'informations, à savoir l'identifiant logique T1, T2, T3, T4 de ce terminal et l'adresse IP du module SIP Registrar 25.

La passerelle résidentielle 20 est connectée au réseau Internet 5 par l'intermédiaire d'une interface ADSL référencée 32.

A la figure 1, on a référencé 50 une plateforme de service SIP/IMS (IP Multimedia Subsystem).

A chaque demande d'établissement d'une session par l'un des terminaux T1 à T4, le module SIP 24 obtient l'identifiant logique et l'adresse IP configurée dans le terminal et ajoute toutes les autres informations nécessaires pour communiquer avec la plateforme de service 50 (numéro de téléphone, login/password d'authentification, nom du domaine du Registrar,...).

Vis-à-vis de ces terminaux, le module SIP 24 agit comme Registrar et proxy SIP, c'est-à-dire :
- qu'il enregistre directement ces terminaux, sans authentification SIP ; et
- qu'il relaie les demandes d'établissement d'appels entre ces terminaux et la plateforme de service 50, tout en modifiant les informations réseaux nécessaires à cette plateforme.

Dans l'exemple de réalisation décrit ici, la plateforme résidentielle 20 comporte en outre un serveur DHCP 33, les données de configuration de ce serveur 33 étant configurées par le module SIP 24.

Dans le mode de réalisation décrit ici, l'option DHCP 120 "SIP proxy" est configurée avec l'adresse IP LAN (Local Area Network) de la passerelle résidentielle 20.

Dans l'exemple de réalisation décrit ici, la passerelle résidentielle 20 comporte également un serveur Web utilisé lors de la phase d'association des terminaux T1, T4 à un compte VoIP.

Enfin, la mémoire vive 22 comporte trois fichiers 35, 36, 37 qui vont maintenant être décrits en référence à la figure 2.

A la **figure 2****,** on a représenté :
- un fichier de configuration 35 ;
- un fichier d'enregistrement 36 ; et
- un fichier d'association 37.

Dans l'exemple de réalisation décrit ici, nous supposerons que l'utilisateur a souscrit à une offre VoIP pour trois numéros de téléphone NUM1, NUM2 et NUM3.

Au moment de l'achat de sa passerelle résidentielle 20, le proxy SIP 26 télécharge auprès de l'opérateur un fichier de configuration VoIP 35 et enregistre automatiquement les trois comptes auprès de la plateforme de service 50.

Plus précisément, chacun de ces comptes est constitué par un numéro de téléphone, par exemple NUM1, associé avec des données de configuration SIP CONF_SIP1 propres à ce numéro NUM1, ces données de configuration comportant notamment un login et un password spécifiques à ce numéro.

Le fichier d'enregistrement 36 est obtenu à l'issue de la deuxième phase d'enregistrement au sens de l'invention.

Il comporte par exemple, pour chacun des terminaux T1 à T4, l'identifiant logique T1 à T4 de ce terminal, l'adresse MAC (@MAC1 à @MAC4) de ce terminal, l'adresse IP (@IP1 à @IP4) de ce terminal et son port SIP (P1 à P4).

Ce fichier d'enregistrement 36 est créé par le module SIP 24. Plus précisément, lors de l'attribution d'adresses IP par le protocole DHCP, chaque terminal découvre dynamiquement son proxy Registrar d'attachement via l'option 120. Il émet, sur le port LAN du module SIP 24, sa requête d'enregistrement.

Le module SIP 24 détecte que l'adresse IP Registrar contenue dans cette requête correspond à son adresse IP côté LAN. Il transmet une réponse d'acquittement positive (200 OK) vers le terminal puis renseigne le fichier d'enregistrement 36.

Dans l'exemple de réalisation décrit ici, le fichier d'association 37 est créé, par l'utilisateur, en saisissant des champs appropriés dans une page Web obtenue à partir du serveur Web 34.

Il permet d'associer, à chacun des numéros NUM1 à NUM3, au moins un identifiant logique d'un terminal T1 à T4 du réseau domestique.

Dans l'exemple décrit ici, les terminaux T1 et T3 sont associés au numéro de téléphone NUM1, et les terminaux T2 à T4 respectivement au numéro NUM2 et NUM3.

Nous allons maintenant décrire en référence à la **figure 3** les principales étapes du procédé de configuration conforme à l'invention dans un mode de réalisation.

Ce procédé de configuration comporte :
- une phase d'enregistrement automatique PH1 ;
- une deuxième phase d'enregistrement PH2 ; et
- une phase d'association PH3.

Dans l'exemple décrit ici, ce procédé est mis en oeuvre dans un programme d'ordinateur qui comporte en outre une phase PH4 de traitement des appels par la passerelle résidentielle 20.

La phase d'enregistrement PH1 est effectuée au moment de la première configuration de la passerelle résidentielle 20, par exemple en agence.

Elle comporte une première étape E10 au cours de laquelle le module SIP 24 de la passerelle télécharge le fichier de configuration 35 préparé par l'opérateur, ce fichier contenant toutes les données de configuration SIP pour les comptes de voix sur IP souscrits par le client.

Cette étape E10 de téléchargement est suivie par une étape E20 d'enregistrement des trois comptes provisionnés auprès de la plateforme de service 50.

Le module SIP 24 enregistre automatiquement les comptes provisionnés auprès de la plateforme SIP 50. Plus précisément, pour chaque compte VoIP, il gère une session d'enregistrement et utilise les données login/password associées à ce compte pour s'authentifier auprès de la plateforme SIP 50. A partir de cet instant, les comptes VoIP souscrits sont vus actifs du côté de la plateforme SIP 50.

La deuxième phase d'enregistrement PH2 est effectuée à chaque mise sous tension de la passerelle résidentielle 20.

Elle permet d'enregistrer un terminal physique au niveau du module SIP 24.

Au cours d'une étape E30, le serveur DHCP 33 de la passerelle résidentielle 20 reçoit une requête DHCP en provenance d'un terminal par exemple T1.

En réponse, le modèle DHCP fournit l'adresse IP (@IP1) de ce terminal (étape E40).

Puis le terminal T1 envoie son identifiant T1 et son adresse IP @IP1 à la passerelle 20.

Le module SIP 24 peut alors, au cours d'une étape E50, enregistrer l'identifiant, l'adresse MAC, l'adresse IP et le port SIP de chacun des terminaux dans le fichier d'enregistrement 36.

La phase PH3 d'association permet d'associer, dans le fichier d'association 37, chaque compte de voix sur IP avec au moins un identifiant logique de terminal.

Dans l'exemple décrit ici, lorsque l'utilisateur veut associer un terminal physique T1 à T4, il envoie une requête HTTP au serveur Web 34 de la passerelle 20, cette requête étant reçue au cours d'une étape E60.

En réponse à cette requête, le serveur Web 34 fournit une page Web à l'utilisateur.

Cette page Web comporte des champs de saisie par lesquels l'utilisateur peut associer, à chaque numéro de téléphone NUM1 à NUM3, au moins un compte de voix sur IP.

Sur réception de cette page Web dûment remplie, la passerelle résidentielle 20 enregistre ces différentes associations au cours d'une étape E80.

Cette étape E80 d'association termine le procédé de configuration conforme à l'invention.

Nous allons maintenant décrire une phase PH4 de traitement des appels par la passerelle résidentielle 20.

Nous supposerons qu'au cours d'un test E90, la passerelle résidentielle 20 détermine si l'appel à traiter est un appel entrant ou un appel sortant.

S'il s'agit d'un appel sortant, le test E90 est suivi :
- par une étape E100 au cours de laquelle le proxy 26 remplace le nom du terminal T1 à T4 émetteur de la requête par le numéro de téléphone associé à ce terminal dans le fichier d'association 37 et
- par une phase E110 au cours de laquelle le proxy 26 ajoute les autres champs provisionnés associés à ce numéro de téléphone dans le fichier de configuration 35 (login/password).

Par exemple, si l'appel est émis par le terminal T2, les champs de la requête SIP émise par ce terminal sont complétés par :
- le nom de l'utilisateur SIP, à savoir "T2"<>"NUM2" :
- les noms de domaines : "adresse LAN de la passerelle 20"<> "nom de domaine de la ptateforme SIP 50" dans les champs "From", "To", "Request-Line".

Les champs ajoutés sont les login et password d'authentification CONF_SIP2.

Si au cours du test E90, la passerelle domestique 20 détermine que l'appel à traiter est un appel entrant, elle remplace (étape E120) le numéro de téléphone par le nom du terminal associé dans le fichier d'association 37.

## Revendications

1. Procédé de configuration d'une passerelle résidentielle (20) apte à communiquer avec au moins un terminal domestique (T1-T4) selon le protocole SIP, ce procédé comportant :
- une première phase (PH1) d'enregistrement par ladite passerelle d'au moins un compte de voix sur IP représentatif d'une souscription à une offre voix sur IP auprès d'une plateforme de service SIP (50) ;
- une deuxième phase (PH2) d'enregistrement, dans un fichier (36) dit « fichier d'enregistrement » stocké dans la passerelle, d'un identifiant logique dudit terminal (T1) avec une adresse (@IP1) de ce terminal ; et
- une phase (PH3) d'association, dans un fichier (37) dit « fichier d'association » stocké dans la passerelle, dudit compte de voix sur IP avec ledit au moins un identifiant logique (T1) du terminal.

2. Procédé de configuration selon la revendication 1, **caractérisé en ce que** ladite première phase (PH1) d'enregistrement comporte :
- une étape (E10) de téléchargement d'un fichier (35) dit « fichier de configuration », ce fichier comportant des données (NUM1, CONF_SIP1) permettant d'enregistrer ledit au moins un compte de voix sur IP auprès de ladite plateforme de service (50) ; et
- une étape (E20) d'envoi d'une requête d'enregistrement comportant lesdites données (NUM1, CONF_SIP1) à ladite plateforme de service (50).

3. Procédé de configuration selon la revendication 1 ou 2, **caractérisé en ce que** ladite deuxième phase (PH2) d'enregistrement comporte :
- une étape (E30) de réception d'une requête DHCP en provenance dudit terminal (T1) ;
- une étape d'obtention de l'adresse IP (@IP1) dudit terminal (T1) et d'envoi de cette adresse (@IP1) audit terminal (T1) en réponse à ladite requête ;
- une étape (E45) de réception d'une requête d'enregistrement comportant au moins ledit identifiant logique (T1) et ladite adresse (@IP1) ; et
- une étape (E50) d'enregistrement dudit identifiant logique (T1) et de ladite adresse (@IP1) dans ledit fichier d'enregistrement (36).

4. Procédé de configuration selon l'une quelconque des revendications 1 à 3, **caractérisé en ce que** ladite phase (PH3) d'association comporte :
- une étape (E70) d'envoi, sur réception (E60) d'une requête, d'un formulaire comportant un élément distinctif (NUM1, NUM2, NUM3) de chacun desdits comptes de voix sur IP et un champ permettant d'associer au moins un identifiant logique (T1) de terminal à chacun de ces éléments (NUM1, NUM2, NUM3) ; et
- une étape (E80) de réception dudit formulaire complété et d'enregistrement, dans ledit fichier d'association (37), des identifiants logiques (T1) de terminaux en association avec lesdits comptes de voix sur IP, conformément au contenu dudit formulaire.

5. Passerelle résidentielle (20) apte à communiquer avec au moins un terminal domestique (T1-T4) selon le protocole SIP, cette passerelle comportant :
- des premiers moyens pour enregistrer au moins un compte de voix sur IP représentatif d'une souscription à une offre voix sur IP auprès d'une plateforme de service SIP (50) ;
- des deuxièmes moyens d'enregistrement, dans un fichier (36) dit « fichier d'enregistrement », d'un identifiant logique dudit terminal (T1) avec une adresse (@IP1) de ce terminal ; et
- des moyens d'association, dans un fichier (37) dit « fichier d'association », dudit compte de voix sur IP avec ledit au moins un identifiant logique (T1) du terminal.

6. Programme d'ordinateur comportant des instructions pour l'exécution des étapes du procédé de configuration selon l'une quelconque des revendications 1 à 5 lorsque ledit programme est exécuté par un ordinateur.

7. Support d'enregistrement lisible par un ordinateur sur lequel est enregistré un programme d'ordinateur comprenant des instructions pour l'exécution des étapes du procédé de configuration selon l'une quelconque des revendications 1 à 5.

## Patentansprüche

1. Verfahren zur Konfiguration eines Residential Gateways (20), das mit mindestens einem Heimendgerät (T1-T4) gemäß dem SIP-Protokoll kommunizieren kann, wobei dieses Verfahren aufweist :
- eine erste Phase (PH1) der Registrierung durch das Gateway mindestens eines Voice-over-IP-Kontos, das für ein Abonnement eines Voice-over-IP-Angebots bei einer SIP-Dienstplattform (50) repräsentativ ist;
- eine zweite Phase (PH2) der Registrierung, in einer im Gateway gespeicherten "Registrierungsdatei" genannten Datei (36), einer logischen Kennung des Endgeräts (T1) mit einer Adresse (@IP1) dieses Endgeräts; und
- eine Phase (PH3) der Zuordnung, in einer im Gateway gespeicherten "Zuordnungsdatei" genannten Datei (37), des Voice-over-IP-Kontos zu der mindestens einen logischen Kennung (T1) des Endgeräts.

2. Konfigurationsverfahren nach Anspruch 1, **dadurch gekennzeichnet, dass** die erste Registrierungsphase (PH1) aufweist:
- einen Schritt (E10) des Herunterladens einer "Konfigurationsdatei" genannten Datei (35), wobei diese Datei Daten (NUM1, CONF_SIP1) aufweist, die es erlauben, das mindestens eine Voice-over-IP-Konto in der Dienstplattform (50) zu registrieren; und
- einen Schritt (E20) des Sendens einer die Daten (NUM1, CONF_SIP1) enthaltenden Registrierungsanforderung an die Dienstplattform (50).

3. Konfigurationsverfahren nach Anspruch 1 oder 2, **dadurch gekennzeichnet, dass** die zweite Registrierungsphase (PH2) aufweist:
- einen Schritt (E30) des Empfangs einer DHCP-Anforderung vom Endgerät (T1);
- einen Schritt des Erhalts der IP-Adresse (@IP1) des Endgeräts (T1) und des Sendens dieser Adresse (@IP1) an das Endgerät (T1) als Antwort auf die Anforderung;
- einen Schritt (E45) des Empfangs einer Registrierungsanforderung, die mindestens die logische Kennung (T1) und die Adresse (@IP1) aufweist; und
- einen Schritt (E50) der Registrierung der logischen Kennung (T1) und der Adresse (@IP1) in der Registrierungsdatei (36).

4. Konfigurationsverfahren nach einem der Ansprüche 1 bis 3, **dadurch gekennzeichnet, dass** die Zuordnungsphase (PH3) aufweist:
- einen Schritt (E70) des Sendens, bei Empfang (E60) einer Anforderung, eines Formulars, das ein unterscheidendes Element (NUM1, NUM2, NUM3) jedes der Voice-over-IP-Konten und ein Feld aufweist, das es ermöglicht, jedem dieser Elemente (NUM1, NUM2, NUM3) mindestens eine logische Endgerätkennung (T1) zuzuordnen; und
- einen Schritt (E80) des Empfangs des vervollständigten Formulars und der Registrierung, in der Zuordnungsdatei (37), der logischen Endgerätekennungen (T1) zusammen mit den Voice-over-IP-Konten, gemäß dem Inhalt des Formulars.

5. Residential Gateway (20), das mit mindestens einem Heimendgerät (T1-T4) gemäß dem SIP-Protokoll kommunizieren kann, wobei dieses Gateway aufweist:
- erste Einrichtungen, um mindestens ein Voice-over-IP-Konto zu registrieren, das für ein Abonnement eines Voice-over-IP-Angebots bei einer SIP-Dienstplattform (50) repräsentativ ist;
- zweite Einrichtungen zur Registrierung, in einer "Registrierungsdatei" genannten Datei (36), einer logischen Kennung des Endgeräts (T1) mit einer Adresse (@IP1) dieses Endgeräts; und
- Einrichtungen zur Zuordnung, in einer "Zuordnungsdatei" genannten Datei (37), des Voice-over-IP-Kontos zu der mindestens einen logischen Kennung (T1) des Endgeräts.

6. Computerprogramm, das Anweisungen zur Ausführung der Schritte des Konfigurationsverfahrens nach einem der Ansprüche 1 bis 5 aufweist, wenn das Programm von einem Computer ausgeführt wird.

7. Computerlesbarer Aufzeichnungsträger, auf dem ein Computerprogramm aufgezeichnet ist, das Anweisungen zur Ausführung der Schritte des Konfigurationsverfahrens nach einem der Ansprüche 1 bis 5 enthält.

## Claims

1. Method for configuring a residential gateway (20) able to communicate with at least one domestic terminal (T1-T4) according to the SIP protocol, this method comprising:
- a first phase (PH1) of registering by said gateway of at least one Voice-over-IP account representative of a subscription to a Voice-over-IP package with an SIP service platform (50);
- a second phase (PH2) of registering, in a file (36) termed a "registration file" stored in the gateway, a logical identifier of said terminal (T1) with an address (@IP1) of this terminal; and
- a phase (PH3) of associating, in a file (37) termed an "association file" stored in the gateway, said Voice-over-IP account with said at least one logical identifier (T1) of the terminal.

2. Configuration method according to Claim 1, **characterized in that** said first registration phase (PH1) comprises:
- a step (E10) of downloading a file (35) termed a "configuration file", this file comprising data (NUM1, CONF_SIP1) making it possible to register said at least one Voice-over-IP account with said service platform (50); and
- a step (E20) of dispatching a registration request comprising said data (NUM1, CONF_SIP1) to said service platform (50).

3. Configuration method according to Claim 1 or 2, **characterized in that** said second registration phase (PH2) comprises:
- a step (E30) of receiving a DHCP request originating from said terminal (T1);
- a step of obtaining the IP address (@IP1) of said terminal (T1) and of dispatching this address (@IP1) to said terminal (T1) in response to said request;
- a step (E45) of receiving a registration request comprising at least said logical identifier (T1) and said address (@IP1); and
- a step (E50) of registering said logical identifier (T1) and said address (@IP1) in said registration file (36).

4. Configuration method according to any one of Claims 1 to 3, **characterized in that** said association phase (PH3) comprises:
- a step (E70) of dispatching, on receipt (E60) of a request, a form comprising a distinctive element (NUM1, NUM2, NUM3) of each of said Voice-over-IP accounts and a field making it possible to associate at least one terminal logical identifier (T1) with each of these elements (NUM1, NUM2, NUM3); and
- a step (E80) of receiving said completed form and of registering, in said association file (37), the logical identifiers (T1) of terminals in association with said Voice-over-IP accounts, in accordance with the content of said form.

5. Residential gateway (20) able to communicate with at least one domestic terminal (T1-T4) according to the SIP protocol, this gateway comprising:
- first means for registering at least one Voice-over-IP account representative of a subscription to a Voice-over-IP package with an SIP service platform (50);
- second means for registering, in a file (36) termed a "registration file", a logical identifier of said terminal (T1) with an address (@IP1) of this terminal; and
- means for associating, in a file (37) termed an "association file", said Voice-over-IP account with said at least one logical identifier (T1) of the terminal.

6. Computer program comprising instructions for the execution of the steps of the configuration method according to any one of Claims 1 to 5 when said program is executed by a computer.

7. Recording medium readable by a computer on which is recorded a computer program comprising instructions for the execution of the steps of the configuration method according to any one of Claims 1 to 5.
